# EUROPÄISCHE PATENTSCHRIFT

(11) **EP 2 141 098 B1**
(45) Veröffentlichungstag und Bekanntmachung des Hinweises auf die Patenterteilung: **08.08.2012**
(21) Anmeldenummer: 09008540.8
(22) Anmeldetag: 30.06.2009
(51) Int. Cl.: B65G 69/18, B65G 67/60, B65G 67/04

(54) **Vorrichtung zum Beladen von Transportmitteln, insbesondere Großraumtransportmitteln, mit Schüttgut sowie Belademodul**
Device for loading transporters, in particular large capacity transporters with bulk material and loading module
Dispositif de chargement de moyens de transport, notamment des moyens de transport grand format, avec des produits en vrac et module de chargement

(30) Priorität: 30.06.2008 DE 102008030286
(43) Veröffentlichungstag der Anmeldung: 06.01.2010
(73) Patentinhaber: FLSmidth A/S, 2500 Valby (DK)
(72) Erfinder: Bach, Erik, 66793 Saarwellingen (DE); Adamy, Matthias, 57550 Falck (FR)
(74) Vertreter: Metten, Karl-Heinz

(56) Entgegenhaltungen:
- DE-A1- 2 157 893
- DE-A1- 2 516 943
- DE-A1- 3 309 738
- DE-A1- 3 441 411
- DE-A1- 19 616 129
- US-A- 4 760 856

## Beschreibung

Die Erfindung betrifft eine Vorrichtung zum Beladen von Transportmitteln, insbesondere Großraumtransportmitteln, z.B. einen Schiffsbelader, sowie ein Belademodul, umfassend die erfindungsgemäße Vorrichtung. Ferner betrifft die Erfindung die Verwendung der erfindungsgemäßen Vorrichtung sowie des erfindungsgemäßen Belademoduls zum Beladen von Großraumtransportmitteln, insbesondere von Schiffen, mit fluidisierbaren und/oder nicht fluidisierbaren Schüttgütern.

Die Verladung von Schüttgütern auf geeignete Transportmittel ist in den unterschiedlichsten Bereichen anzutreffen. Die hierfür vorgesehenen Vorrichtungen haben mitunter Beladekapazitäten von beispielsweise 50 t/h bis 1000 t/h zu bewerkstelligen. Große Mengen an Schüttgütern sind beispielsweise bei der Zementherstellung, bei Kohlekraftwerken oder bei der Müllverladung zu transportieren. Hierbei haben die Verladeeinrichtungen derart eingerichtet zu sein, dass kontinuierlich Material an- bzw. abtransportiert werden kann, und zwar ohne dass es zu Transportengpässen kommt.

Beim Betrieb von Kohlekraftwerken fallen als Abfallstoffe regelmäßig große Mengen an Asche sowie Gips an. Der Transport bzw. das Beladen von Trockenasche wird aufgrund der starken Staubentwicklung regelmäßig als sehr problematisch empfunden und macht häufig zusätzliche konstruktive Maßnahmen erforderlich. Trockenasche als fluidisierbares Schüttgut wird daher oft über geschlossene Transportleitungen und nicht über Förderbänder transportiert. Nassasche kann hingegen über solche Förderbänder dem jeweiligen Transportmittel zugeführt werden.

Allerdings hat es sich als nachteilig erwiesen, obwohl konstruktiv wenig anspruchsvoll, Nassasche einerseits und Gips andererseits aufgrund der hierbei eintretenden Kontaminationseffekte vom Kraftwerk aus über dasselbe Förderband einem Transportmittel zuzuführen. Eine wünschenswerte Weiterverwendung der genannten Abfallsstoffe wird hierdurch erschwert oder sogar ganz unmöglich gemacht. Derartige Kontaminationseffekte lassen sich bei konventionellen Beladeeinheiten regelmäßig nur dadurch vermeiden, dass die eingesetzten Transportbänder vor dem Wechsel des zu transportierenden Schüttguts vollständig gereinigt werden. Dieses ist zeit- und kostenaufwendig und in vielen Fällen technisch nicht zuverlässig zu lösen. Die separate Heranführung von Nassasche und Gips vom Kraftwerk zur Verladestation ist hingegen konstruktiv sehr aufwendig.

Die US 4,760,856 A offenbart eine Vorrichtung zum Beladen eines Transportmittel, gemäss den oberbegriff des Anspruchs 1 bei der die Anfeuchtvorrichtung in der ersten Schüttguttransportvorrichtung ausgebildet ist.

Der DE 196 16 129 A1 entnimmt man eine vereinfachte Anlagentechnik für die Befeuchtung von Kraftwerksreststoffen bei der Beladung von z.B. Schiffen. Um Nassasche zu erhalten, kann gemäß der DE 196 16 129 A 1 auf sogenanntes REA-Wasser zurückgegriffen werden, d.h. auf Wasser, dass bei dem Prozess der Rauchgasentschwefelung anfällt.

Die DE 34 41 411 A1 offenbart eine Vorrichtung zum Beladen eines Schiffes mit losem Schüttgut wie Zement, Kalk oder Gips mit Hilfe von hintereinander geschalteten Förderbändern, wobei an jeder Übergangsstelle von einem Band zum nachfolgenden Band eine Entstaubungshaube angeordnet ist. Zudem umfasst die vorgeschlagene Vorrichtung im Verschiebebereich des Abwurfwagens teleskopartig auszieh- und verschiebbare Abdeckhauben.

In der DE 25 16 943 A 1 wird ein Schiffsbelader offenbart, der ohne Vorschubkopf auskommt. Bei Schiffsbeladern mit Vorschubsköpfen sind regelmäßig zwei Brückenteile erforderlich, die gegeneinander verfahrbar sind. Hiermit gehen ein hoher Verschleiß und eine hohe Staubentwicklung einher, weshalb häufig beweglich angeordnete Entstaubungsvorrichtungen eingesetzt werden. Bei dem Schiffsbelader gemäß der DE 25 16 943 A1 kommt eine in sich geschlossen ausgestaltete Bandbrücke zum Einsatz, die an einem Ende auf einer Wippe der Zentralsäule und an einem anderen Ende auf einer Wippe einer radial verfahrbaren Stütze gelagert ist und die in ihrem oberen Bereich einen abgedeckten Schlitz zur Schüttgutaufnahme aufweist.

Die DE 33 09 738 A1 befasst sich mit einer Vorrichtung zum Beladen von Schiffen mit Losegut und Gebindegut, und zwar ohne dass das Gebinde vorher in Packhäusem oder dergleichen abgepackt und mittels besonderer Gebindegutfördereinrichtungen zur Beladevorrichtung transportiert werden muss. Dieses gelingt mit Hilfe eines verfahrbaren Portals sowie einer mit diesem Portal verbundenen Gutaufnahmeeinrichtung für Losegut, die mit einer an dem Portal angeordneten Abfüllanlage in Wirkverbindung steht. Ferner hat die Vorrichtung gemäß der DE 33 09 738 A1 eine Gutabgabeeinrichtung für in Gebinde abgepacktes Losegut zu enthalten.
In der DE 33 09 738 A1 wird demnach eine Vorrichtung zum Beladen von Großraumtransportmitteln offenbart, welche das Beladen sowohl mit Gebinden als auch mit Losegut gestattet. Diese Beladevorrichtung verfügt über ein verfahrbares Portal mit einem lageveränderlichen Auslegearm und einer hiermit verbundenen Gutaufnahmeeinrichtung für Losegut, welche mit einer am Portal angeordneten Abfüllanlage in Verbindung steht, so dass an der Beladevorrichtung selber erst das in Gebinde abgepackte Losegut erhalten und unmittelbar dem Großraumtransportmittel zugeführt werden kann.

Der DE 34 41 411 C2 entnimmt man eine Vorrichtung zum Beladen eines Schiffes mit losem Schüttgut, wobei an den Übergabestellen des Schüttguts von einem Förderband zu einem nachfolgenden Förderband Entstaubungshauben vorgesehen sind mit daran angeschlossenen Entstaubungsleitungen. Auch ist das Zuführband im Verschiebebereich des Abwurfwagens durch teleskopartig auszieh- und/oder verschiebbare Deckhauben abgedeckt. Auf diese Weise soll eine Entstaubung möglichst umfassend, insbesondere auch am Übergang zum vertikal drehbaren Ausleger unter gleichzeitiger Abführung des freigesetzten Staubs sichergestellt werden.

Aus der DE 21 57 893 OS geht eine Hebe- und Förderanlage zum Entladen von Schiffen mit einem das Fördergut aus dem Schiffsraum saugenden, pneumatischen Anlageteil und einem sich anschließendem Transportanlageteil hervor. Hierbei hat das pneumatische Anlageteil als annährend senkrechtes Steigrohr ausgebildet zu sein, welches in eine geschwindigkeitsreduzierende Umlenk- und Expansionskammer mündet. Der zur Verfügung stehende Unterdruck wird hierbei vollumfänglich für den vertikalen Transport ausgenützt.

Die aus dem Stand der Technik bekannten Vorrichtungen zum Beladen von Schiffen stellen ab auf Detailweiterentwicklungen und lassen daher noch stets Wünsche in Richtung auf eine optimierte Beladevorrichtung offen.

Daher lag der vorliegenden Erfindung die Aufgabe zugrunde, eine Vorrichtung zum Beladen von Transportmitteln, insbesondere Großraumtransportmitteln, z.B. Schiffen, zugänglich zu machen, die nicht mit den Nachteilen des Stands der Technik behaftet ist und die eine effiziente und im wesentlichen kontinuierliche Beladung von Transportmitteln und insbesondere Großraumtransportmitteln, insbesondere mit fluidisierbaren und gegebenenfalls insbesondere zusätzlich auch nicht fluidisierbaren Schüttgütern, ermöglicht, ohne wesentliche Kontaminationseffekte in Kauf nehmen zu müssen.

Demgemäß wurde eine Vorrichtung zum Beladen von Transportmitteln, insbesondere Großraumtransportmitteln, mit Schüttgütern, gefunden, umfassend
a) ein Zentralgestell mit einer Front- und einer gegenüberliegenden Rückseite mit mindestens einem Vorratsbehältnis zur Aufnahme von fluidisierbarem Schüttgut mit mindestens einem ersten Schüttgutauslass,
b) mindestens eine Anfeuchtvorrichtung zum Anfeuchten von über den ersten Schüttgutauslass entnommenem Schüttgut,
c) mindestens eine erste Leitung, inbesondere Druckförderleitung, z.B. pneumatische Leitung,für den Transport von fluidisierbarem Schüttgut in das Vorratsbehältnis mit einem Ausgabeende für den Transfer des fluidisierbaren Schüttguts in das Vorratsbehältnis und einem, insbesondere reversibel verschließbaren, vorzugsweise an eine Förderleitung reversibel ankoppelbaren, Eingabeende,
d) mindestens einen, inbesondere lage- und/oder längenveränderbaren, ersten Auslegearm, enthaltend eine erste Schüttguttransportvorrichtung, insbesondere mindestens ein Förderband, mit einem Abgabebereich, insbesondere Abgabeende, und einem Aufnahmebereich, insbesondere Aufnahmeende,
e) mindestens eine Schüttgutabgabeeinrichtung mit einem Aufnahmebereich, insbesondere Aufnahmeende, und einem Abgabebereich, insbesondere Abgabeende, eingerichtet und geeignet zur Aufnahme von Schüttgut von der ersten Schüttguttransportvorrichtung und zur Überführung des Schüttgutes in ein Transportmittel, insbesondere Großraumtransportmittel,
f) mindestens eine zweite Schüttguttransportvorrichtung, insbesondere mindestens ein Förderband,eingerichtet und geeignet zur Aufnahme und zum Transport von über die Anfeuchtvorrichtung angefeuchtetem und dem Vorratsbehältnis entstammendem fluidisierbaren Schüttgut, mit einem ersten Aufnahmebereich, insbesondere Aufnahmeende, und einem ersten Abgabebereich, insbesondere Abgabeende, wobei der erste Abgabebereich derart eingerichtet oder einrichtbar ist, dass angefeuchtetes fluidisierbares Schüttgut der ersten Schüttguttransportvorrichtung, insbesondere derem Aufnahmebereich, zuführbar ist.

Geeignete Transportmittel bzw. Großraumtransportmittel im Sinne der vorliegenden Erfindung umfassen z.B. Schiffe, LKWs und Güterwagons. Besonders geeignet ist die erfindungsgemäße Vorrichtung für das Beladen von Großraumtransportmitteln, z.B. Schiffen. Eine solche Vorrichtung stellt mithin vorzugsweise auch einen Schiffsbelader dar.

Geeignete fluidisierbare Schüttgüter umfassen z.B. Zement, Kalksteinmehl, Mehl, Getreide, Gries, Mischfutter und Flug- bzw. Trockenasche. Unter einem fluidisierbaren Schüttgut kann im Sinne der vorliegenden Erfindung ganz allgemein partikuläres, feinteiliges Schüttgut verstanden werden, das mit Luft zu fließfähigen Gemischen verwirbelt werden. Geeignete nicht fluidisierbare Schüttguter umfassen z.B. Kohle, Sand, Kies, Gips und Nassasche.

Geeignete Zentralgestelle für Vorrichtungen zum Beladen von Transportmitteln, insbesondere Großraumtransportmitteln, wie sie beispielsweise bei Schiffsbeladern zum Einsatz kommen, sind dem Fachmann bekannt. Unter der Frontseite eines Zentralgestells soll im Fall der vorliegenden Erfindung diejenige Seite verstanden werden, die dem zu beladenden Transportmittel, insbesondere Großraumtransportmittel beim Beladevorgang zugewandt ist. Das Zentralgestell bzw. die erfindungsgemäße Vorrichtung zum Beladen von Transportmitteln, insbesondere Großraumtransportmitteln, insbesondere ein Schiffsbelader, kann vorzugsweise im wesentlichen senkrecht und/oder parallel und/oder in einem beliebigen Winkel zur Frontseite verfahren werden.

Das Vorratsbehältnis zur Aufnahme von fluidisierbarem Schüttgut kann in einer Ausführungsform auch als Zwischensilo aufgefasst werden, dem aus an einem anderen Ort vorliegenden größeren Schüttgutlagern über mindestens eine weitere Leitung, welche vorzugsweise mit der ersten Leitung, vorzugsweise über deren Eingabeende, reversibel verbunden oder verbindbar ist, fluidisierbares Schüttgut zugeführt wird. Das in dem Vorratsbehältnis gelagerte Schüttgut wird im allgemeinen über mindestens einen an dem unteren Ende des Vorratsbehältnisses befindlichen ersten Schüttgutauslass, insbesondere schwerkraftgetrieben, dem Vorratsbehältnis entnommen und kann in einer Ausgestaltung mindestens einer Anfeuchtvorrichtung, vorzugsweise in Form von Anfeuchtschnecken vorliegend, zugeführt werden, vorzugsweise über eine Leitung zwischen dem Schüttgutauslass und der Anfeuchtvorrichtung.

Die erste Leitung ist vorzugsweise als Druckförderleitung, insbesondere als pneumatische Förderleitung ausgestaltet.Die erfindungsgemäße Vorrichtung ist vorzugsweise ferner ausgestattet mit mindestens einer Flüssigkeitsleitung mit einem Ausgabeende, welches in der Anfeuchtvorrichtung und/oder einer Zuleitung von dem Schüttgutauslass des Vorratsbehältnisses zu der Anfeuchtvorrichtung und/oder in den Schüttgutauslass mündet, und einem Eingabeende für die Einspeisung der Flüssigkeit, insbesondere in dem Bereich der Rückseite des Zentralgestells.

Geeignete Schüttgutabgabeeinrichtungen, mit denen fluidisierbares oder nicht fluidisierbers Schüttgut in das Transportmittel, insbesondere Großraumtransportmittel, überführt wird, stellen z.B. sogenannte Beladeschurren oder Fallrohre dar. Derartige Abgabeeinrichtungen sind dem Fachmann bekannt.

In einer vorteilhaften Weiterentwicklung ist vorgesehen, dass die zweite Schüttguttransportvorrichtung ferner eingerichtet und geeignet ist zur Aufnahme von nicht fluidisierbarem Schüttgut, das nicht der Anfeuchtvorrichtung entstammt, insbesondere über einen zweiten Aufnahmebereich, insbesondere zweites Aufnahmeende, sowie zum Transfer von nicht fluidisierbarem Schüttgut über den ersten Abgabebereich an die erste Schüttguttransportvorrichtung. In dieser Ausgestaltung erstreckt sich die zweite Schüttguttransportvorrichtung vorteilhafterweise nicht mehr nur vom ersten Aufnahmebereich bis zum ersten Abgabebereich, sondern erstreckt sich weg von dem ersten Abgabebereich über den ersten Aufnahmebereich hinaus bis zu einem zweiten Aufnahmebereich oder gar über diesen hinaus. Der zweite Aufnahmebereich dient zur Aufnahme von nicht fluidisierbarem Schüttgut, beispielsweise feuchtem Gips, und liegt vorzugsweise, betrachtet in Richtung von der Frontseite zur Rückseite des Zentralgestells, jenseits der Rückseite und beabstandet von dieser vor. Bei dieser Ausführungsform erstreckt sich die zweite Schüttguttransportvorrichtung zumeist über die gesamte Breite des Zentralgestells. In einer weiteren Ausführungsform können die erste und die zweite Schüttguttransportvorrichtung eine einzige einheitliche Schüttguttransportvorrichtung bilden. Die vorangehend geschilderte, bevorzugte Weiterentwicklung der erfindungsgemäßen Vorrichtung zum Beladen von Transportmitteln, insbesondere Großraumtransportmitteln, beispielsweise Schiffen, zeichnet sich insbesondere dadurch aus, dass neben einer Einheit zum Beladen von Transportmitteln mit fluidisierbarem Schüttgut aus dem Vorratsbehältnis am Zentralgestell zusätzlich auch Vorrichtungselemente vorgesehen sind, um im Wechsel mit der Beladung mit dem vorangehend genannten fluidisierbaren Schüttgut auch, insbesondere im Wechsel bzw. alternierend, eine Beladung mit nicht fluidisierbarem Schüttgut vornehmen zu können, das nicht der Anfeuchtschnecke entstammt. In diesem Zusammenhang soll unter fluidisierbarem Schüttgut im Sinne der vorliegenden Erfindung insbesondere auch ein solches verstanden werden, das als bzw. wie ein Fluid dem Vorratsbehältnis, insbesondere dem am Zentralgestell befindlichen Vorratsbehältnis zugeführt bzw. zuführbar ist, wobei unbeachtlich sein soll, dass dieses fluidisierbare Schüttgut durch das Anfeuchten vermittels der Anfeuchteinrichtung in einen nicht fluidisierbaren Zustand überführt wird. Ferner soll in diesem Zusammenhang im Sinne der vorliegenden Erfindung unter einem nicht fluidisierbaren Schüttgut ein solches verstanden werden, dass im nicht fluidisierbaren Zustand an das bzw. in den Bereich des Zentralgestells der erfindungsgemäßen Vorrichtung gelangt. Eine Beladung eines Transportmittels mit einem fluidisierbaren Schüttgut im Sinne der vorliegenden Erfindung umfasst folglich den Antransport des Schüttguts bis zum Vorratsbehältnis am Zentralgestell in fluidisierbarer bzw. fluidisierter Form und die Einbringung in das Transportmittel nach dem Anfeuchten in einer Anfeuchtvorrichtung, wodurch das Schüttgut dann nicht mehr unmittelbar fluidisierbar ist. Die vorangehend geschilderte Weiterentwicklung der erfindungsgemäßen Vorrichtung hat sich als besonders vorteilhaft erwiesen. Denn es gelingt mit dieser Vorrichtung ohne weiteres, die vorangehend beschriebenen fluisierbaren und nicht fluisierbaren Schüttgüter im aufeinanderfolgenden Wechsel mit ein und derselben Ladeeinheit aparativ unaufwendig einem Transportmittel, insbesondere einem Großraumtransportmittel, zuzuführen, und gleichzeitig die Kontamination sehr gering zu halten oder gar ausschließen zu können, wobei hiermit zudem ein sehr geringer Dekontaminations- bzw. Reinigungsaufwand einhergeht.

Erfindungsgemäße Vorrichtungen, beispielsweise Schiffsbelader, können des weiteren ausgestattet sein mit mindestens einer dritten Schüttguttransportvorrichtung mit einem Aufnahmebereich, insbesondere Aufnahmeende, und einem Abgabebereich, insbesondere Abgabeende, geeignet und eingerichtet für den Transport von nicht fluidisierbarem Schüttgut, wobei der Abgabebereich geeignet und eingerichtet ist zur Abgabe von Schüttgut an bzw. auf die zweite Schüttguttransportvorrichtung und wobei der Aufnahmebereich eingerichtet und geeignet ist zur Aufnahme von nicht fluidisierbarem Schüttgut, das nicht der Anfeuchtvorrichtung entstammt. Bei dieser Ausgestaltung wird das nicht fluidisierbare Schüttgut, z.B. feuchter Gips, das über eine Fördereinrichtung der erfindungsgemäßen Vorrichtung zugeführt wird, über die separate, dritte Schüttguttransportvorrichtung der zweiten Schüttguttransportvorrichtung, vorzugsweise dem ersten oder vorteilhafterweise einem zweiten Aufnahmebereich dieser Transportvorrichtung zugeführt. Bei dieser Ausführungsform liegt der zweite Aufnahmebereich der zweiten Schüttgutstransportvorrichtung vorzugsweise innerhalb des Zentralgestells.

Während bei den vorangehend geschilderten Ausführungsformen die zweite Schüttguttransportvorrichtung sowohl für den Transport von angefeuchtetem fluidisierbaren Schüttgut, als auch für den Transport von nicht fluidisierbarem Schüttgut herangezogen wird, kann bei Einsatz einer separaten vierten Schüttguttransportvorrichtung die zweite Schüttguttransportvorrichtung allein für den Transfer von angefeuchtetem fluidisierbaren Schüttgut verwendet werden. Bei dieser Variante erstreckt sich die vierte Schüttguttransportvorrichtung von der ersten Schüttgutvorrichtung, insbesondere derem Aufnahmebereich, bis zu einem Aufnahmebereich, welcher geeignet und eingerichtet ist für die Aufnahme von nicht fluidisierbarem Schüttgut. Alternativ oder zusätzlich kann die erfindungsgemäße Vorrichtung demgemäß ausgestaltet sein mit mindestens einer vierten Schüttguttransportvorrichtung mit einem Aufnahmebereich, insbesondere Aufnahmeende, und einem Abgabebereich, insbesondere Abgabeende, geeignet und eingerichtet für den Transport von nicht fluidisierbarem Schüttgut, das nicht der Anfeuchtvorrichtung entstammt, wobei der Abgabebereich geeignet und eingerichtet ist zur Abgabe von Schüttgut an bzw. auf die erste Schüttguttransportvorrichtung und wobei der Aufnahmebereich eingerichtet und geeignet ist zur Aufnahme von nicht fluidisierbarem Schüttgut, das nicht der Anfeuchtvorrichtung entstammt.

In einer zweckmäßigen Ausgestaltung ist vorgesehen, dass die Anfeuchtvorrichtung, die erste Leitung, der erste Auslegearm, die erste Schüttguttransportvorrichtung, die Schüttgutabgabeeinrichtung, die zweite Schüttguttransportvorrichtung, die dritte Schüttguttransportvorrichtung und/oder die vierte Schüttguttransportvorrichtung sowie gegebenenfalls ein zweiter Auslegearm an dem Zentralgestell montiert vorliegen.

Ein weitere Aspekt der erfindungsgemäßen Vorrichtung sieht vor, dass der erste Auslegearm an der Frontseite des Zentralgestells vorliegt und dass das Eingabeende der ersten Leitung, der zweite Aufnahmebereich der zweiten Schüttguttransportvorrichtung, der Aufnahmebereich der dritten Schüttguttransportvorrichtung und/oder der Aufnahmebereich der vierten Schüttguttransportvorrichtung an der Rückseite des Zentralgestells, im Bereich der Rückseite oder beabstandet von der Rückseite vorliegen.

Bei der ersten, zweiten, dritten und/oder vierten Schüttguttransportvorrichtung für fluidisierbares oder nicht fluidisierbares Schüttgut handelt es sich im allgemeinen um ein Förderband, insbesondere um einen Gurtförderer. Derartige Fördereinrichtungen sind dem Fachmann bekannt.

Bevorzugterweise ist der erste Auslegearm und gegebenenfalls ein zweiter Auslegearm und/oder die erste Schüttguttransportvorrichtung höhenverstellbar, schwenkbar und/oder kippbar. Der erste Auslegerarm, an dem regelmäßig die erste Schüttguttransportvorrichtung befestigt ist oder aufliegt, kann z.B. über eine Gelenkachse verfügen, die mit dem Zentralgestell in Verbindung steht.

Vorteilhafterweise ist das Zentralgestell und damit auch die gesamte erfindungsgemäße Vorrichtung verfahrbar ausgestaltet, insbesondere auf Schienen verfahrbar.

Zur Vermeidung von Umweltbelastungen kann die Schüttgutabgabeeinrichtung mit einer Enstaubungs- und/oder Staubunterdrückungseinrichtung oder einer Staubrückführvorrichtung ausgestattet sein.

In einer Weiterentwicklung umfasst die erfindungsgemäße Vorrichtung ferner eine zweite Leitung. Diese zweite Leitung ist vorgesehen für den Transport von fluidisierbarem Schüttgut aus dem Vorratsbehältnis mit einem Eingabeende am oder im Vorratsbehältnis, insbesondere an der Unterseite des Vorratsbehältnisses, z.B. in Form eines zweiten Schüttgutauslasses oder gekoppelt hiermit, oder and der Zuleitung vom Schüttgutauslass des Vorratsbehältnisses zur Anfeuchtvorrichtung, und einem Ausgabeende für die Abgabe oder den Transfer von fluisierbarem Schüttgut aus dem Vorratsbehältnis in z.B. ein Transportmittel, insbesondere Großraumtransportmittel, und/oder in bzw. auf eine dritte Leitung, welche das Schüttgut zu dem Transportmittel transferiert. Indem das in dem Vorratsbehältnis vorliegende fluidisierbare Schüttgut nicht mehr über die Anfeuchtvorrichtung, sondern, gleichzeitig oder alternativ, über eine Fluidleitung, die zweite Leitung, entnommen werden kann, wird der Freiheitsgrad bei der Bedienung und dem Einsatz der erfindungsgemäßen Vorrichtung nochmals erhöht. Beispielsweise kann es möglich sein, dass die zu beladenen Transportmittel, beispielsweise Transportschiffe, keine Belademöglichkeiten aufweisen für angefeuchtetes fluidisierbares Schüttgut, d.h. für nicht fluidisierbares Schüttgut, oder dass die Beladekapazitäten hierfür ausgeschöpft sind, nicht aber für fluidisierbares Schüttgut. Solche Transportmittel verfügen dann zumeist auch über geeignete Einfüllvorrichtungen für dieses fluidisierbare Schüttgut, die mit den Zuleitungen der erfindungsgemäßen Beladevorrichtung, z.B. der zweiten und/oder dritten Leitung, gekoppelt werden können.

Unter nicht fluidisierbares Schüttgut im Sinne der vorliegenden Erfindung soll ein solches Schüttgut verstanden werden, dass in einer Form vorliegt, in der es nicht unmittelbar in einen fluiden Zustand überführt werden kann. Selbstverständlich unterfallen unter diese Definition auch solche Schüttgüter, die z.B. nach einem Trocknungsvorgang fluidisierbar wären. Demgemäß stellt auch das in dem Vorratsbehältnis gespeicherte fluidisierbare Schüttgut, z.B. Asche, nach Verlassen der Anfeuchtvorrichtung nicht mehr fluidisierbares Schüttgut dar, sondern liegt als nicht fluidisierbares Schüttgut vor. Im Sinne der Erfindung unterfällt ein Transfer des in der Anfeuchtvorrichtung angefeuchteten, dem Vorratsbehältnis entstammenden fluidisierbaren Schüttguts unter ein Beladen von Transportmitteln mit fluidisierbaren Schüttgütern. Somit findet im Sinne der Erfindung eine Beladung von Transportmitteln mit fluidisierbaren Schüttgütern bereits dann an, wenn das Schüttgut in fluidisierbarer bzw. fluidisierter Form in das Vorratsbehältnis am Zentralgestell transportiert wird. In entsprechender Weise findet im Sinne der Erfindung eine Beladung von Transportmitteln mit nicht fluidisierbaren Schüttgütern dann statt, wenn das Schüttgut in nicht fluidisierbarer Form dem Zentralgestell der Beladevorrichtung zugeführt wird. Beispielhaft sei als nicht fluidisierbares Schüttgut ebenfalls auf angefeuchteten Gips verwiesen, beispielsweise wie dieser die Gasreinigungsanlagen von z.B. Kohlekraftwerken verlässt.

Gemäß einer weiteren Ausgestaltung ist die erfindungsgemäße Vorrichtung ferner mit mindestens einer dritten Leitung für den Transport von fluidisierbarem Schüttgut ausgestattet mit einem, insbesondere reversibel verschließbaren, vorzugsweise an eine Förderleitung reversibel ankoppelbaren, Eingabeende und einem Ausgabeende, wobei dieses Eingabeende mit dem Ausgabeende der zweiten Leitung verbunden oder verbindbar ist. Über das Ausgabeende der dritten Leitung kann dann das fluidisierbare Schüttgut in das Transportmittel abgegeben werden.

In einer weiteren Ausführungsform umfasst die erfindungsgemäße Vorrichtung ferner mindestens eine vierte Leitung für den Transport von fluidisierbarem Schüttgut mit einem Eingabeende, insbesondere an der Rückseite des Zentralgestells, im Bereich der Rückseite oder beabstandet von der Rückseite des Zentralgestells, und einem Ausgabeende für die Abgabe oder den Transfer von fluidisierbarem Schüttgut. Diese vierte Leitung kann alternativ oder zusätzlich zu der zweiten und/oder dritten Leitung vorliegen. Mit der vierten Leitung kann fluidisierbares Schüttgut unmittelbar über das Eingabeende, dass insbesondere reversibel verschließbar und vorzugsweise an eine Förderleitung reversibel ankoppelbar ist, von einer Förderstation, z.B. einer stationären Förderstation, dem Transportmittel, insbesondere Großraumtransportmittel, zugeführt werden. Demgemäß dient das Ausgabeende dieser vierten Leitung für die Abgabe bzw. den Transfer des fluidisierbaren Schüttguts in das Transportmittel.

Gemäß einer weiteren Ausgestaltung kann die erfindungsgemäße Vorrichtung ferner ausgestattet sein mit mindestens einer fünften Leitung zum Transport von fluidisierbarem Schüttgut mit einem, insbesondere reversibel verschließbaren, vorzugsweise an eine Förderleitung reversibel ankoppelbaren, Eingabeende, insbesondere an oder im Bereich der Rückseite oder beabstandet von der Rückseite des Zentralgestells vorliegend, und einem Ausgabeende, das mit dem Eingabeende der dritten Leitung verbunden oder verbindbar ist. Diese fünfte Leitung kann alternativ oder zusätzlich zu der zweiten und/oder vierten Leitung vorgesehen sein. Funktionell können die dritte und fünfte Leitung, wenn miteinander verbunden, die vierte Leitung ersetzen. Gleiches gilt umgekehrt.

Die zweite, dritte, vierte, und/oder fünfte Leitung, insbesondere in Form einer Luftförderrinne, können zumindest abschnittsweise auf dem ersten Ausleger oder auf einem weiteren Ausleger angebracht sein, um einen effizienten Transport des fluidisierbaren Schüttguts von dem Zentralgestell zu dem Transportmittel zu bewerkstelligen.

Die zweite, dritte, vierte und/oder fünfte Leitung können in einer zweckmäßigem Ausgestaltung zumindest abschnittweise auf dem ersten Auslegearm oder auf einem, insbesondere lage- und/oder längenveränderbaren, zweiten Auslegearm angebracht sein, bzw. vorliegen. Dieser zweite Auslegearm befindet sich vorzugsweise an der Frontseite des Zentralgestells angebracht, d.h. dem zu beladenden Transportmittel, insbesondere Großraumtransportmittel, zugewandt. Es hat sich als vorteilhaft erwiesen, diese Transportleitungen für das fluidisierbare Schüttgut auf einem zweiten Auslegearm vorzusehen. Wird eine dritte Leitung für den Transport von fluidisierbarem Schüttgut eingesetzt, liegt diese in einer zweckmäßigen Variante der vorliegenden Erfindung im wesentlichen vollständig auf dem zweiten Auslegearm vor.

Die erste, zweite, dritte, vierte und/oder fünfte Leitung, insbesondere die zweite, dritte, vierte und/oder fünfte Leitung,stellt vorzugsweise eine pneumatische Förderrinne dar, insbesondere eine sogenannte Luftförderrinne. Diese Leitungen können in bekannter Weise zur besseren Handhabung auch mit ein oder mehr Gelenken ausgestattet sein. Luftförderrinnen sind dem Fachmann bekannt. Luftförderinnen zeichnen sich im Allgemeinen durch einen Boden oder ein Bodensegment aus, z.B. in Form eines porösen Materials oder eines Gewebematerials, durch das Luft von unten in die Förderrinne transferiert werden kann, z.B. mit Hilfe von Ventilatoren, wodurch Schüttgut besonders leicht in den fluiden Zustand überführt werden kann. Geeignete Lüftförderrinnen umfassen z.B. in einer Ausführungsform Ober- und Unterkasten die durch eine poröse Auflockerungsplatte getrennt sind. Hierbei wird in den Unterkasten die sogenannte Auflockerungsluft eingeblasen, während im Oberkasten bedingt durch dieses Einblasen das zu fördernde Schüttgut zum Fließen gebracht wird. Ober- und Unterkasten können fest miteinander verschraubt sein und sind vorzugsweise gegeneinander abgedichtet. Die zweite, dritte, vierte und/oder fünfte Leitung sind in einer bevorzugten Ausgestaltung zumindest abschnittsweise geneigt angeordnet, beispielsweise in einem Winkel von 4° oder darüber, insbesondere von etwa 6°oder darüber, um den Transport des fluidisierbaren Schüttguts zu erleichtern.

Die dieser Erfindung zugrunde liegende Aufgabe wird des weiteren gelöst durch ein Belademodul zum Beladen von Transportmitteln, insbesondere Großraumtransportmitteln, z.B. von Schiffen, LKWs oder Güterwagons, umfassend eine erfindungsgemäße Vorrichtung und mindestens eine, insbesondere stationäre, Förderstation, umfassend mindestens eine Transportleitung für den Transfer von fluidisierbarem Schüttgut, umfassend mindestens ein reversibel verschließbares und mit dem Eingabeende der ersten und gegebenenfalls auch mit der vierten und/oder fünften Leitung koppelbares Ausgabeende.

Die Förderstation im Sinne der vorliegenden Erfindung kann z.B. ein Gestell umfassen, das mit einer Galerie oder einer Arbeitsplattform ausgestattet ist. Beispielsweise kann auf Höhe dieser Arbeitsplattform nicht fluidisierbares Schüttgut, das über ein Förderband der Förderstation zugeführt worden ist, über die Übergabeeinheit an die zweite, dritte oder vierte Schüttguttransportvorrichtung, insbesondere die Aufnahmebereiche dieser Transportvorrichtungen, transferiert werden.

Bevorzugte erfindungsgemäße Belademodule verfügen ferner über mindestens eine Übergabeeinheit für die Übergabe von nicht fluidisierbarem Schüttgut auf die bzw. an die zweite, dritte und/oder vierte Schüttguttransportvorrichtung.

Dabei können diese Ausführungsformen ferner mindestens eine fünfte Schüttguttransportvorrichtung für die Anlieferung von nicht fluidisierbarem Schüttgut zu der Übergabeeinheit umfassen.

Die Förderstation ist regelmäßig der Rückseite des Zentralgestells zugewandt angeordnet.

Das Belademodul kann in einer Ausführungsform auch Schienen umfassen, auf denen das Zentralgestell verfahrbar ist.

Selbstverständlich ist es möglich, erfindungsgemäße Belademodule vorzusehen, die mit zwei, drei, vier oder mehr, insbesondere stationären, Förderstationen ausgestattet sind. Dabei kann vorgesehen sein, dass z.B. eine fünfte Schüttguttransportvorrichtung sich über die erste Förderstation hinaus bis zur zweiten, dritten und/oder vierten Förderstation erstreckt. Ferner kann vorgesehen sein, dass sich die Transportleitung für die Anlieferung von fluidisierbarem Schüttgut über die erste Förderstation hinaus bis zur zweiten, dritten und/oder vierten Förderstation erstreckt.

Die vorliegende Erfindung bewirkt, dass sich Transportmittel bzw. Großraumtransportmittel wie Schiffe effizient und auf konstruktiv einfache Weise mit fluidisierbaren und nicht fluidisierbaren Schüttgütern beladen lassen. Hierbei gelingt die Beladung von z.B. Schiffen mit fluidisierbaren und nicht fluidisierbaren Schüttgütern mit ein und derselben Vorrichtung. Auch kann beispielsweise ein Schiff mit Hilfe nur einer erfindungsgemäßen Beladevorrichtung sowohl mit fluidisierbarem Schüttgut, beispielsweise Asche, als auch mit nicht fluidisierbarem Schüttgut, beispielsweise Gips, beschickt werden. Ohne größeren Arbeits- und Zeitaufwand kann z.B. von einer Beladung mit Nassasche auf die Beladung mit Gips umgestellt werden. Anders als bei gattungsgemäßen Anlagen ist nicht mehr die gesamte Förderstrecke zu reinigen oder eine separate Förderstrecke für das zu transportierende zweite Schüttgut vorzusehen. Vielmehr bedarf es allenfalls noch der Reinigung von Schüttguttransfervorrichtungen an der Verladestation selber. Ein weiterer Vorteil im Zusammenhang mit der erfindungsgemäßen Vorrichtung erwächst daraus, dass diese nicht nur ohne weiteres verfahrbar ist, beispielsweise über Schienenstränge, sondern entlang der verfahrbaren Strecke mit separaten Förderstationen koppelbar ist. Auf dieser Weise kann mit einer einzigen erfindungsgemäßen Beladevorrichtung entlang z.B. eines Beladekais nicht nur ein Schiff, sondern eine Vielzahl an Schiffen beladen werden. Es ist nicht mehr erforderlich, längenveränderbare Transportvorrichtungen vorzusehen. Auch kann die erfindungsgemäße Beladevorrichtung ohne weiteres für eine Vielzahl unterschiedlicher Schüttguttypen verwendet werden.

Geeignete Ausführungsformen der erfindungsgemäßen Beladevorrichtung sowie des erfindungsgemäßen Belademoduls lassen sich auch wie folgt zusammenfassen:
1. Vorrichtung zum Beladen von Transportmitteln, insbesondere Großraumtransportmitteln, mit Schüttgütern, umfassend
   a) ein, insbesondere verfahrbares, Zentralgestell mit einer Front- und einer gegenüberliegenden Rückseite mit mindestens einem Vorratsbehältnis zur Aufnahme von fluidisierbarem Schüttgut mit mindestens einem ersten Schüttgutauslass ,
   b) mindestens eine Anfeuchtvorrichtung, insbesondere Anfeuchtschnecke, zum Anfeuchten von über den ersten Schüttgutauslass entnommenem Schüttgut,
   c) mindestens eine erste Leitung, insbesondere Druckförderleitung, für den Transport von fluidisierbarem Schüttgut in das Vorratsbehältnis mit einem Ausgabeende für den Transfer des fluidisierbaren Schüttguts in das Vorratsbehältnis und einem, insbesondere reversibel verschließbaren, vorzugsweise an eine Förderleitung reversibel ankoppelbaren, Eingabeende,
   d) mindestens einen, inbesondere lage- und/oder längenveränderbaren, ersten Auslegearm, enthaltend eine erste Schüttguttransportvorrichtung, insbesondere mindestens ein Förderband, mit einem Abgabebereich, insbesondere Abgabeende, und einem Aufnahmebereich, insbesondere Aufnahmeende,
   e) mindestens eine Schüttgutabgabeeinrichtung mit einem Aufnahmebereich, insbesondere Aufnahmeende, und einem Abgabebereich, insbesondere Abgabeende, eingerichtet und geeignet zur Aufnahme von Schüttgut von der ersten Schüttguttransportvorrichtung und zur Überführung des Schüttgutes in ein Transportmittel, insbesondere Großraumtransportmittel,
   f) mindestens eine zweite Schüttguttransportvorrichtung, insbesondere mindestens ein Förderband, eingerichtet und geeignet zur Aufnahme und zum Transport von über die Anfeuchtvorrichtung angefeuchtetem und dem Vorratsbehältnis entstammendem fluidisierbaren Schüttgut, mit einem ersten Aufnahmebereich, insbesondere Aufnahmeende, und einem ersten Abgabebereich, insbesondere Abgabeende, wobei der erste Abgabebereich derart eingerichtet oder einrichtbar ist, dass angefeuchtetes fluidisierbares Schüttgut der ersten Schüttguttransportvorrichtung, insbesondere derem Aufnahmebereich, zuführbar ist.
2. Vorrichtung nach Ausführungsform 1, **dadurch gekennzeichnet, dass** die zweite Schüttguttransportvorrichtung ferner eingerichtet und geeignet ist zur Aufnahme von nicht fluidisierbarem Schüttgut, das nicht der Anfeuchtvorrichtung entstammt, insbesondere über einen zweiten Aufnahmebereich, insbesondere zweites Aufnahmeende, sowie zum Transfer von diesem nicht fluidisierbaren Schüttgut über den ersten Abgabebereich an die erste Schüttguttransportvorrichtung.
3. Vorrichtung nach Ausführungsform 1 oder 2, ferner umfassend
   mindestens eine dritte Schüttguttransportvorrichtung mit einem Aufnahmebereich, insbesondere Aufnahmeende, und einem Abgabebereich, insbesondere Abgabeende, geeignet und eingerichtet für den Transport von nicht fluidisierbarem Schüttgut, wobei der Abgabebereich geeignet und eingerichtet ist zur Abgabe von Schüttgut an bzw. auf die erste Schüttguttransportvorrichtung und wobei der Aufnahmebereich eingerichtet und geeignet ist zur Aufnahme von nicht fluidisierbarem Schüttgut,
   und/oder mindestens eine vierte Schüttguttransportvorrichtung mit einem Aufnahmebereich, insbesondere Aufnahmeende, und einem Abgabebereich, insbesondere Abgabeende, geeignet und eingerichtet für den Transport von nicht fluidisierbarem Schüttgut, das nicht der Anfeuchtvorrichtung entstammt, wobei der Abgabebereich geeignet und eingerichtet ist zur Abgabe von Schüttgut an bzw. auf die zweite Schüttguttransportvorrichtung und wobei der Aufnahmebereich eingerichtet und geeignet ist zur Aufnahme von nicht fluidisierbarem Schüttgut, das nicht der Anfeuchtvorrichtung entstammt.
4. Vorrichtung nach einer der vorangehenden Ausführungsformen 1 bis 3, **dadurch gekennzeichnet, dass** die Anfeuchtvorrichtung, die erste Leitung, der erste Auslegearm, die erste Schüttguttransportvorrichtung, die Schüttgutabgabeeinrichtung, die zweite Schüttguttransportvorrichtung, die dritte Schüttguttransportvorrichtung und/oder die vierte Schüttguttransportvorrichtung an dem Zentralgestell montiert vorliegen.
5. Vorrichtung nach einer der vorangehenden Ausführungsformen 1 bis 4, **dadurch gekennzeichnet, dass** der erste Auslegearm an der Frontseite des Zentralgestells vorliegt und dass das Eingabeende der ersten Leitung, der zweite Aufnahmebereich der zweiten Schüttguttransportvorrichtung, der Aufnahmebereich der dritten Schüttguttransportvorrichtung und/oder der Aufnahmebereich der vierten Schüttguttransportvorrichtung an der Rückseite des Zentralgestells, im Bereich der Rückseite oder beabstandet von der Rückseite vorliegen.
6. Vorrichtung nach einer der vorangehenden Ausführungsformen 1 bis 5, **dadurch gekennzeichnet, dass** die Anfeuchtvorrichtung eine Anfeuchtschnecke darstellt.
7. Vorrichtung nach einer der vorangehenden Ausführungsformen 1 bis 6, gekennzeichnet durch mindestens eine Flüssigkeitsleitung mit einem Ausgabeende, welches in der Anfeuchtvorrichtung und/oder einer Zuleitung von dem Schüttgutauslass des Vorratsbehältnisses zu der Anfeuchtvorrichtung und/oder in den Schüttgutauslass mündet, und einem Eingabeende für die Einspeisung der Flüssigkeit, insbesondere in dem Bereich der Rückseite des Zentralgestells.
8. Vorrichtung nach einer der vorangehenden Ausführungsformen 1 bis 7, **dadurch gekennzeichnet, dass** die erste, zweite, dritte und/oder vierte Schüttguttransportvorrichtung ein Förderband darstellt, insbesondere einen Gurtförderer.
9. Vorrichtung nach einer der vorangehenden Ausführungsformen 1 bis 8, **dadurch gekennzeichnet, dass** der erste Auslegearm und/oder die erste Schüttguttransportvorrichtung höhenverstellbar, schwenkbar und/oder kippbar ist.
10. Vorrichtung nach einer der vorangehenden Ausführungsformen 1 bis 9, **dadurch gekennzeichnet, dass** der Auslegearm über eine mit dem Zentralgestell in Verbindung stehende Gelenkachse verfügt.
11. Vorrichtung nach einer der vorangehenden Ausführungsformen 1 bis 10, **dadurch gekennzeichnet, dass** die zweite, dritte oder vierte Schüttguttransportvorrichtung, insbesondere deren Aufnahmebereich, über die Rückseite hinausragen, insbesondere beabstandet von der Rückseite vorliegen.
12. Vorrichtung nach einer der vorangehenden Ausführungsformen 1 bis 11, **dadurch gekennzeichnet, dass** das Zentralgestell verfahrbar ist.
13. Vorrichtung nach Ausführungsform 12, dadurch gekennzeichnet, dass das Zentralgestell auf Schienen verfahrbar ist.
14. Vorrichtung nach einer der vorangehenden Ausführungsformen 1 bis 13, **dadurch gekennzeichnet, dass** die Schüttgutabgabeeinrichtung mit einer Entstaubungs- und/oder Staubunterdrückungseinrichtung ausgestattet ist.
15. Vorrichtung nach einer der vorangehenden Ausführungsformen 1 bis 14, **dadurch gekennzeichnet, dass** die Schüttgutabgabeeinrichtung einen Vorschubkopf umfasst.
16. Vorrichtung nach einer der vorangehenden Ausführungsformen 1 bis 15, ferner umfassend eine zweite Leitung für den Transport von fluidisierbarem Schüttgut aus dem Vorratsbehältnis mit einem Eingabeende am oder im Vorratsbehältnis, insbesondere an der Unterseite des Vorratsbehältnisses, oder and der Zuleitung von Schüttgutauslass zur Anfeuchtvorrichtung, und einem Ausgabeende für die Abgabe oder den Transfer von fluisierbarem Schüttgut aus dem Vorratsbehältnis.
17. Vorrichtung nach Ausführungsform 16, ferner umfassend mindestens eine dritte Leitung für den Transport von fluidisierbarem Schüttgut mit einem Eingabeende und einem Ausgabeende, wobei dieses Eingabeende mit dem Ausgabeende der zweiten Leitung verbunden oder verbindbar ist.
18. Vorrichtung nach einer der vorangehenden Ausführungsformen 1 bis 17, ferner umfassend mindestens eine vierte Leitung für den Transport von fluidisierbarem Schüttgut mit einem Eingabeende, insbesondere an der Rückseite des Zentralgestells, im Bereich der Rückseite oder beabstandet von der Rückseite des Zentralgestells, und einem Ausgabeende für die Abgabe oder den Transfer von fluidisierbarem Schüttgut.
19. Vorrichtung nach Ausführungsform 17 oder 18, ferner umfassend mindestens eine fünfte Leitung zum Transport von fluidisierbarem Schüttgut mit einem, insbesondere reversibel verschließbaren, vorzugsweise an eine Förderleitung reversibel ankoppelbaren, Eingabeende, insbesondere an oder im Bereich der Rückseite oder beabstandet von der Rückseite vorliegend, und einem Ausgabeende, das mit dem Eingabeende der dritten Leitung verbunden oder verbindbar ist.
20. Vorrichtung nach einer der Ausführungsformen 16 bis 19, ferner umfassend mindestens einen, insbesondere lage- und/oder längenveränderbaren, zweiten Auslegearm, enthaltend zumindest einen Abschnitt der zweiten, dritten, vierten und/oder der fünften Leitung.
21. Vorrichtung nach einer der vorangehenden Ausführungsformen 1 bis 20, **dadurch gekennzeichnet, dass** die erste, zweite, dritte, vierte und/oder fünfte Leitung eine pneumatische Förderrinne umfasst oder darstellt, insbesondere eine Luftförderrinne.
22. Vorrichtung nach einer der Ausführungsformen 16 bis 21, **dadurch gekennzeichnet, dass** die zweite, dritte, vierte und/oder fünfte Leitung zumindest abschnittsweise auf dem ersten oder zweiten Auslegearm vorliegen.
23. Belademodul zum Beladen von Großraumtransportmitteln, umfassend eine Vorrichtung gemäß einer der vorangehenden Ausführungsformen 1 bis 22 und mindestens eine, insbesondere stationäre, Förderstation, umfassend mindestens eine Transportleitung für den Transfer von fluidisierbarem Schüttgut, umfassend mindestens ein reversibel verschließbares und mit dem Eingabeende der ersten und gegebenenfalls auch mit der vierten und/oder fünften Leitung koppelbares Ausgabeende.
24. Belademodul nach Ausführungsform 23, ferner umfassend mindestens eine Übergabeeinheit für die Übergabe von nicht fluidisierbarem Schüttgut auf die bzw. an die zweite, dritte und/oder vierte Schüttguttransportvorrichtung.
25. Belademodul nach Ausführungsform 24, ferner umfassend mindestens eine fünfte Schüttguttransportvorrichtung für die Anlieferung von nicht fluidisierbarem Schüttgut zu der Übergabeeinheit.
26. Belademodul nach einer der Ausführungsformen 23 bis 25, **dadurch gekennzeichnet, dass** die Förderstation der Rückseite des Zentralgestells zugewandt angeordnet ist.
27. Belademodul nach einer der Ausführungsformen 23 bis 26, ferner umfassend Schienen, auf denen das Zentralgestell verfahrbar ist.
28. Belademodul nach einer der Ausführungsformen 23 bis 27, umfassend zwei, drei oder vier Förderstationen.
29. Belademodul nach Ausführungsform 28, **dadurch gekennzeichnet, dass** die fünfte Schüttguttransportvorrichtung sich über die erste Förderstation hinaus bis zur zweiten, dritten und/oder vierten Förderstation erstreckt.
30. Belademodul nach Ausführungsform 28 oder 29, **dadurch gekennzeichnet, dass** sich die Transportleitung über die erste Förderstation hinaus bis zur zweiten, dritten und/oder vierten Förderstation erstreckt.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen Zeichnungen zeigen
- Figur 1: eine schematische Seitenansicht einer erfindungsgemäßen Vorrichtung,
- Figur 2: eine schematische Frontansicht der erfindungsgemäßen Vorrichtung gemäß Figur 1,
- Figur 3: eine schematische Seitenansicht einer weiteren Ausführungsform einer erfindungsgemäßen und
- Figur 4: eine schematische Draufsicht auf ein erfindungsgemäßes Belademodul.

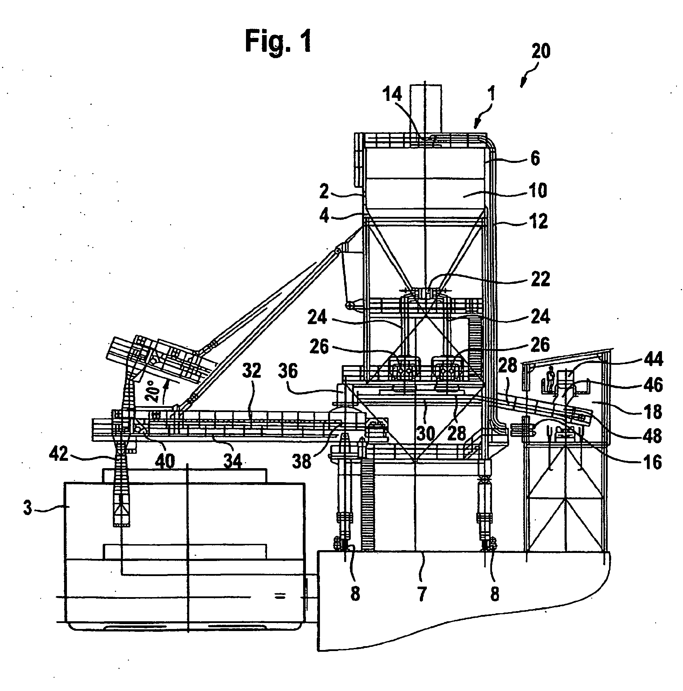

Figur 1 zeigt in schematischer Seitenansicht eine erfindungsgemäße Beladevorrichtung 1 in Form eines Schiffsbeladers. Die Beladevorrichtung 1 umfasst ein Zentralgestell 2 mit einer dem zu beladenden Schiff 3 zugewandten Frontseite 4 und einer gegenüberliegenden Rückseite 6. Das Zentralgestell 2 ist entlang eines Kais 7 verfahrbar auf Schienen 8 angebracht. Im oberen Bereich des Zentralgestells 2 liegt ein Vorratsbehälter 10 für fluidisierbares Stückgut, beispielsweise Flugasche vor. Die Flug- bzw. Trockenasche wird über eine erste Leitung 12, deren Abgabeende 14 in dem Vorratsbehälter 10 mündet, in diesen überführt. Die erste Leitung 12 ist in der dargestellten Ausführungsform an dem Zentralgestell 2 befestigt. Die Einlassöffnung bzw. das Eingabeende 16 der ersten Leitung 12 befindet sich im Bereich der Rückseite 6 des Zentralgestells 2. Das Eingabeende 16 kann mit einer Transportleitung für Flug- bzw. Trockenasche, insbesondere umweltdicht, verbunden werden (nicht dargstellt in Figur 1). Das Eingabeende 16 liegt in der in Figur 1 wiedergegebenen Ausführungsform im Bereich einer Förderstation 18 vor. Die Förderstation 18 ist zusammen mit der Vorrichtung 1 Bestandteil eines erfindungsgemäßen Belademoduls 20.

Die in dem Vorratsbehälter 10 vorliegende Trockenasche wird über einen an dem unteren Ende befindlichen Auslass 22 mit Hilfe geeigneter zweiter Leitungen 24 Anfeuchtschnecken 26 zugeleitet, mit deren Hilfe die Trockenasche in Nassasche überführt wird. Von den Anfeuchtschnecken 26 gelangt die Nassasche auf die zweite Schüttguttransportvorrichtung 28, und zwar im Bereich des ersten Aufnahmeendes 30 dieser Transportvorrichtung. Über diese zweite Schüttguttransportvorrichtung 28, die in der abgebildeten Ausführungsform in Form eines Gurtbandförderers vorliegt, wird die Nassasche der ersten Schüttguttransportvorrichtung 32 zugeführt, die auf dem Ausleger 34 vorliegt. Über das erste Abgabeende 36 der zweiten Schüttgutvorrichtung 28 gelangt die Nassasche auf das Aufnahmeende 38 der ersten Schüttguttransportvorrichtung 32. Über das Abgabeende 40 der ersten Schüttguttransportvorrichtung wird die Nassasche sodann in die Schüttgutabgabevorrichtung 42 überführt, bei der sich in der dargestellten Ausführungsform um einen Beladerüssel bzw. Beladeschurre handelt. In Abhängigkeit von dem Beladegrad des Schiffes 3 kann die Schüttgutabgabeeinrichtung 42 über den Ausleger 34 angehoben oder gesenkt werden. Der Ausleger 34 ist über eine Gelenkachse kippbar an dem Zentralgestell 2 angebracht.

Der Figur 1 entnimmt man ferner ein Förderband 44 für ein nicht fluidisierbares Schüttgut, beispielsweise Gips. An einer Übergabestelle 46, die in der Förderstation 18 vorliegt, wird dieses nicht fluidisierbare Schüttgut in einem zweiten Aufnahmebereich 48 auf die zweite Schüttguttransportvorrichtung 28 transferiert. Selbstverständlich ist es ebenfalls möglich, eine separate, dritte Schüttguttransportvorrichtung für den Transfer des nicht fluidisierbaren Schüttguts von der Förderstation 18 zu einer auf dem Zentralgestell 2 vorliegenden zweiten Schüttguttransportvorrichtung 28 zu transferieren.

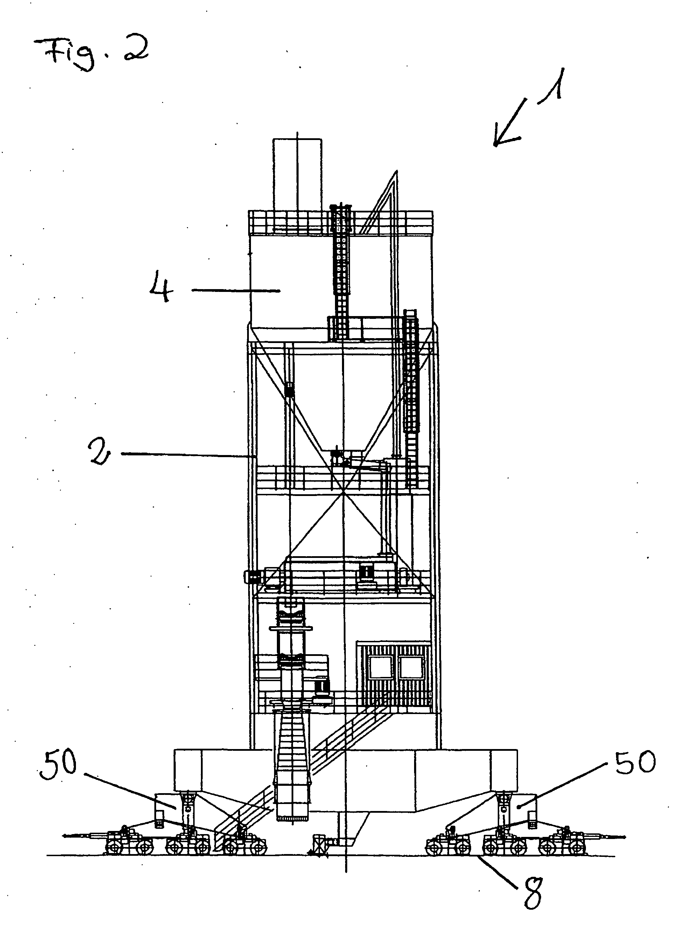

Figur 2 zeigt eine schematische Ansicht der Frontseite 4 der erfindungsgemäßen Vorrichtung 1. Das Zentralgestell 2 ist über Fahrgestelle 50 auf Schienen 8 verfahrbar.

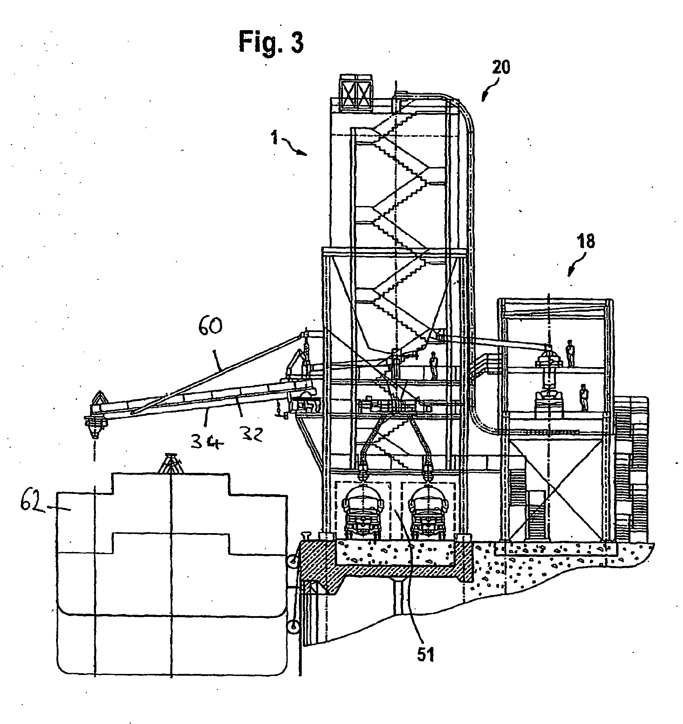

Selbstverständlich ist es ebenfalls möglich, über die erfindungsgemäße Vorrichtung LKWs, wie in Figur 3 wiedergegeben, mit fluidisierbarem und nicht fluidisierbarem Schüttgut zu beladen. Hierfür stellt das Zentralgestell 2 eine Durchfahrt 51 für ein oder zwei oder mehrere LKWs zur Verfügung, die dann unmittelbar schwerkraftgetrieben mit entweder beispielsweise Nassasche oder Gips beladen werden können. Der Figur 3 entnimmt man ferner, dass sich mit der erfindungsgemäßen Vorrichtung simultan oder sukzessive sowohl LKW's wie auch Schiffe mit fluidisierbarem und nicht fluidisierbarem Schüttgut beladen lassen. In der dargestellten Ausführungsform kann z.B. über die zweite Leitung 60, welche z.B. in Form einer Luftförderrinne vorliegen kann und welche mit dem Vorratsbehältnis (nicht abgebildet) am Zentralgestellt verbunden ist, fluidisierbares Schüttgut, ohne über die Anfeuchtvorrichtung angefeuchtet zu werden, unmittelbar in das Schiff 62 transferiert werden.

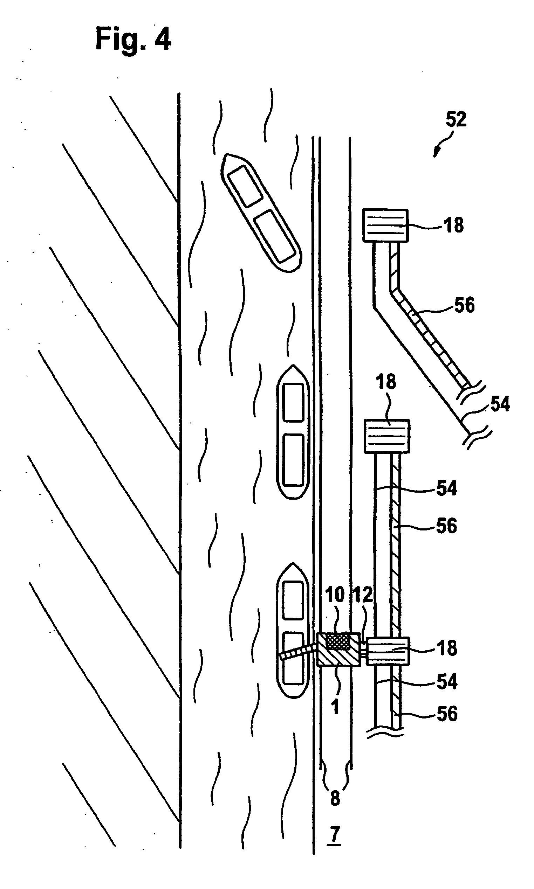

Figur 4 zeigt eine schematische Draufsicht auf ein erfindungsgemäßes Belademodul 52, umfassend eine erfindungsgemäße Vorrichtung 1, Schienen 8 sowie insgesamt drei stationäre Förderstationen 18, die entlang des Kais 7 angeordnet sind. Die Beladeeinrichtung 1 kann über die Schienen 8 entlang der gesamten Länge des Beladekais 7 verfahren werden. An jeder Förderstation 18 kann die erste Leitung 12 für den Transfer von Trockenasche in den Vorratsbehälter 10 mit einer Transportzuleitung 54, die im Bereich der Förderstation 18 endet, verbunden werden. In gleicher Weise kann jeder Förderstation über Förderbänder 56 nicht fluidisierbares Schüttgut wie z.B. Gips zugeführt werden. Dieses nicht fluidisierbare Schüttgut kann dann wieder über die zweite Schüttguttransportvorrichtung 28, z.B. auch unter Einsatz einer separaten, dritten Schüttguttransportvorrichtung, der ersten Schüttguttransportvorrichtung zugeführt werden. Auf diese Weise gelingt eine sehr effiziente Auslastung des kompletten Beladekais. Beispielsweise sind keine Wartezeiten mehr in Kauf zu nehmen für das An- bzw. Ablegen von Schiffen. Unabhängig von der Lage des Schiffes an dem Beladekai und unabhängig von der Art des zu beladenen Schüttguts, sei es fluidisierbares, sei es nicht fluidisierbares Schüttgut, kann der Beladevorgang unverzüglich aufgenommen werden. Bei einem Wechsel von fluidisierbarem Schüttgut auf nicht fluidisierbares Schüttgut oder umgekehrt sind allenfalls noch die erste und die zweite Schüttguttransportvorrichtung sowie die Schüttgutabgabevorrichtung zu reinigen.

## Patentansprüche

1. Vorrichtung (1) zum Beladen von Transportmitteln, insbesondere Großraumtransportmitteln, mit Schüttgütern, umfassend
a)ein, insbesondere verfahrbares, Zentralgestell (2) mit einer Front- (4) und einer gegenüberliegenden Rückseite (6) mit mindestens einem Vorratsbehältnis (10) zur Aufnahme von fluidisierbarem Schüttgut mit mindestens einem ersten Schüttgutauslass (22),
b) mindestens eine Anfeuchtvorrichtung (26), insbesondere Anfeuchtschnecke, zum Anfeuchten von über den ersten Schüttgutauslass (22) entnommenem Schüttgut,
c)mindestens eine erste Leitung (12), insbesondere Druckförderleitung, für den Transport von fluidisierbarem Schüttgut in das Vorratsbehältnis (10) mit einem Ausgabeende (14) für den Transfer des fluidisierbaren Schüttguts in das Vorratsbehältnis (10) und einem, insbesondere reversibel verschließbaren, vorzugsweise an eine Förderleitung reversibel ankoppelbaren, Eingabeende (16), **gekennzeichnet durch**
d) mindestens einen, inbesondere lage- und/oder längenveränderbaren, ersten Auslegearm (34), enthaltend eine erste Schüttguttransportvorrichtung (32), insbesondere mindestens ein Förderband, mit einem Abgabebereich, insbesondere Abgabeende, und einem Aufnahmebereich (38), insbesondere Aufnahmeende,
e)mindestens eine Schüttgutabgabeeinrichtung (42) mit einem Aufnahmebereich, insbesondere Aufnahmeende, und einem Abgabebereich, insbesondere Abgabeende, eingerichtet und geeignet zur Aufnahme von Schüttgut von der ersten Schüttguttransportvorrichtung und zur Überführung des Schüttgutes in ein Transportmittel, insbesondere Großraumtransportmittel,
f) mindestens eine zweite Schüttguttransportvorrichtung (28), insbesondere mindestens ein Förderband, eingerichtet und geeignet zur Aufnahme und zum Transport von über die Anfeuchtvorrichtung (26) angefeuchtetem und dem Vorratsbehältnis entstammendem fluidisierbaren Schüttgut, mit einem ersten Aufnahmebereich (30), insbesondere Aufnahmeende, und einem ersten Abgabebereich (36), insbesondere Abgabeende, wobei der erste Abgabebereich (36) derart eingerichtet oder einrichtbar ist, dass angefeuchtetes fluidisierbares Schüttgut der ersten Schüttguttransportvorrichtung (32), insbesondere derem Aufnahmebereich (38), zuführbar ist.

2. Vorrichtung nach Anspruch 1, **dadurch gekennzeichnet, dass** die zweite Schüttguttransportvorrichtung (28) ferner eingerichtet und geeignet ist zur Aufnahme von nicht fluidisierbarem Schüttgut, das nicht der Anfeuchtvorrichtung entstammt, insbesondere über einen zweiten Aufnahmebereich, insbesondere zweites Aufnahmeende, sowie zum Transfer von diesem nicht fluidisierbaren Schüttgut über den ersten Abgabebereich an die erste Schüttguttransportvorrichtung.

3. Vorrichtung nach Anspruch 1 oder 2, ferner umfassend
mindestens eine dritte Schüttguttransportvorrichtung, insbesondere mindestens ein Förderband, mit einem Aufnahmebereich, insbesondere Aufnahmeende, und einem Abgabebereich, insbesondere Abgabeende, geeignet und eingerichtet für den Transport von nicht fluidisierbarem Schüttgut, wobei der Abgabebereich geeignet und eingerichtet ist zur Abgabe von Schüttgut an oder auf die erste Schüttguttransportvorrichtung (32) und wobei der Aufnahmebereich eingerichtet und geeignet ist zur Aufnahme von nicht fluidisierbarem Schüttgut,
und/oder mindestens eine vierte Schüttguttransportvorrichtung, insbesondere mindestens ein Förderband, mit einem Aufnahmebereich, insbesondere Aufnahmeende, und einem Abgabebereich, insbesondere Abgabeende, geeignet und eingerichtet für den Transport von nicht fluidisierbarem Schüttgut, das nicht der Anfeuchtvorrichtung entstammt, wobei der Abgabebereich geeignet und eingerichtet ist zur Abgabe von Schüttgut an oder auf die zweite Schüttguttransportvorrichtung (28) und wobei der Aufnahmebereich eingerichtet und geeignet ist zur Aufnahme von nicht fluidisierbarem Schüttgut, das nicht der Anfeuchtvorrichtung entstammt.

4. Vorrichtung nach einem der vorangehenden Ansprüche, **gekennzeichnet durch** mindestens eine Flüssigkeitsleitung mit einem Ausgabeende welches in der Anfeuchtvorrichtung (26) und/oder einer Zuleitung von dem Schüttgutauslass (22) des des Vorratsbehältnisses (10) zu der Anfeuchtvorrichtung (26) und/oder in den Schüttgutauslass (22) mündet, und einem Eingabeende (16) für die Einspeisung der Flüssigkeit, insbesondere in dem Bereich der Rückseite des Zentralgestells.

5. Vorrichtung nach einem der vorangehenden Ansprüche, **dadurch gekennzeichnet, dass** die zweite, dritte oder vierte Schüttguttransportvorrichtung, insbesondere deren Aufnahmebereich, über die Rückseite hinausragen, insbesondere beabstandet von der Rückseite vorliegen.

6. Vorrichtung nach einem der vorangehenden Ansprüche, ferner umfassend eine zweite Leitung (24), insbesondere umfassend mindestens eine pneumatische Förderrinne, für den Transport von fluidisierbarem Schüttgut aus dem Vorratsbehältnis (10) mit einem Eingabeende (16) am oder im Vorratsbehältnis (10), insbesondere an der Unterseite des Vorratsbehältnisses, oder and der Zuleitung von Schüttgutauslass (22) zur Anfeuchtvorrichtung (26), und einem Ausgabeende für die Abgabe oder den Transfer von fluisierbarem Schüttgut aus dem Vorratsbehältnis.

7. Vorrichtung nach Anspruch 6, ferner umfassend mindestens eine dritte Leitung, insbesondere umfassend mindestens eine pneumatische Förderrinne, für den Transport von fluidisierbarem Schüttgut mit einem Eingabeende und einem Ausgabeende, wobei dieses Eingabeende mit dem Ausgabeende der zweiten Leitung (24) verbunden oder verbindbar ist.

8. Vorrichtung nach einem der vorangehenden Ansprüche, ferner umfassend mindestens eine vierte Leitung, insbesondere umfassend mindestens eine pneumatische Förderrinne, für den Transport von fluidisierbarem Schüttgut mit einem Eingabeende, insbesondere an der Rückseite des Zentralgestells, im Bereich der Rückseite oder beabstandet von der Rückseite des Zentralgestells, und einem Ausgabeende für die Abgabe oder den Transfer von fluidisierbarem Schüttgut.

9. Vorrichtung nach Anspruch 7 oder 8, ferner umfassend mindestens eine fünfte Leitung, insbesondere umfassend mindestens eine pneumatische Förderrinne, zum Transport von fluidisierbarem Schüttgut mit einem, insbesondere reversibel verschließbaren, vorzugsweise an eine Förderleitung reversibel ankoppelbaren, Eingabeende, insbesondere an oder im Bereich der Rückseite oder beabstandet von der Rückseite vorliegend, und einem Ausgabeende, das mit dem Eingabeende der dritten Leitung verbunden oder verbindbar ist.

10. Vorrichtung nach einem der Ansprüche 6 bis 9, ferner umfassend mindestens einen, insbesondere lage- und/oder längenveränderbaren, zweiten Auslegearm, enthaltend zumindest einen Abschnitt der zweiten, dritten, vierten und/oder der fünften Leitung.

11. Belademodul zum Beladen von Transportmitteln, insbesondere Großraumtransportmitteln, umfassend eine Vorrichtung gemäß einem der vorangehenden Ansprüche und mindestens eine, insbesondere stationäre, Förderstation (18), umfassend mindestens eine Transportleitung für den Transfer von fluidisierbarem Schüttgut, umfassend mindestens ein reversibel verschließbares und mit dem Eingabeende der ersten und gegebenenfalls auch mit der vierten und/oder fünften Leitung koppelbares Ausgabeende.

12. Belademodul nach Anspruch 11, ferner umfassend mindestens eine Übergabeeinheit für die Übergabe von nicht fluidisierbarem Schüttgut auf die oder an die zweite, dritte und/oder vierte Schüttguttransportvorrichtung.

13. Belademodul nach Anspruch 12, ferner umfassend mindestens eine fünfte Schüttguttransportvorrichtung für die Anlieferung von nicht fluidisierbarem Schüttgut zu der Übergabeeinheit.

14. Belademodul nach einem der Ansprüche 11 bis 13, umfassend zwei, drei oder vier Förderstationen.

15. Belademodul nach Anspruch 14, **dadurch gekennzeichnet, dass** die fünfte Schüttguttransportvorrichtung sich über die erste Förderstation (18) hinaus bis zur zweiten, dritten und/oder vierten Förderstation erstreckt.

16. Belademodul nach Anspruch 14 oder 15, **dadurch gekennzeichnet, dass** sich die Transportleitung über die erste Förderstation (18) hinaus bis zur zweiten, dritten und/oder vierten Förderstation erstreckt.

17. Verwendung der Vorrichtung gemäß einem der Ansprüche 1 bis 10 oder des Belademoduls gemäß einem der Ansprüche 11 bis 16 zum Beladen von Schiffen, Lkws oder Wagons mit fluidisierbarem Schüttgut und/oder zum, insbesondere alternierenden, Beladen von Schiffen, LKWs oder Wagons mit fluidisierbarem und nicht fluidisierbarem Schüttgut.

## Claims

1. A device (1) for loading transporters, in particular large-capacity transporters, with bulk materials, comprising
a) a central, in particular movable, frame (2) with a front (4) and an opposite rear side (6), having at least one storage container (10) for receiving fluidizable bulk material, said storage container having at least one first bulk material outlet (22),
b) at least one wetting device (26), in particular a wetting screw, for wetting bulk material taken via the first bulk material outlet (22),
c) at least one first conduit (12), in particular a pressure conveyor conduit, for transporting fluidizable bulk material into the storage container (10), having a discharge end (14) for transferring the fluidizable bulk material into the storage container (10) and a feeding end (16) which, in particular, can be reversibly closed, preferably reversibly coupled to a conveyor conduit, **characterized by**
d) at least one first cantilever arm (34), the position and/or length of which can be varied in particular, containing a first bulk material transport device (32), in particular at least one conveyor belt, having a dispensing region, in particular a dispensing end, and a receiving region (38), in particular a receiving end,
e) at least one bulk material dispensing arrangement (42) having a receiving region, in particular a receiving end, and a dispensing region, in particular a dispensing end, configured and adapted to receive bulk material from the first bulk material transport device and to transfer said bulk material to a transporter, in particular a large-capacity transporter.
f) at least one second bulk material transport device (28), in particular at least one conveyor belt, configured and adapted to receive and transport fluidizable bulk material wetted via the wetting device (26) and coming from the storage container, having a first receiving region (30), in particular a receiving end, and a first dispensing region (36), in particular a dispensing end, wherein the first dispensing region (36) is or can be configured such that wetted fluidizable bulk material can be supplied to the first bulk material transport device (32), in particular to its receiving region (38).

2. A device according to claim 1, **characterized in that** the second bulk material transport device (28) is further configured and adapted to receive non-fluidizable bulk material not coming from the wetting device, in particular via a second receiving region, in particular a second receiving end, and to transfer said non-fluidizable bulk material via the first dispensing region to the first bulk material transport device.

3. A device according to claim 1 or 2, further comprising
at least one third bulk material transport device, in particular at least one conveyor belt, having a receiving region, in particular a receiving end, and a dispensing region, in particular a dispensing end, adapted and configured to transport non-fluidizable bulk material, wherein the dispensing region is adapted and configured to dispense bulk material to or onto the first bulk material transport device (32) and wherein the receiving region is configured and adapted to receive non-fluidizable bulk material,
and/or at least one fourth bulk material transport device, in particular at least one conveyor belt, having a receiving region, in particular a receiving end, and a dispensing region, in particular a dispensing end, adapted and configured to transport non-fluidizable bulk material not coming from the wetting device, wherein the dispensing region is adapted and configured to dispense bulk material to or onto the second bulk material transport device (28) and wherein the receiving region is configured and adapted to receive non-fluidizable bulk material not coming from the wetting device.

4. A device according to any one of the preceding claims, **characterized by** at least one liquid conduit having a discharge end which opens into the wetting device (26) and/or a supply conduit from the bulk material outlet (22) of the storage container (10) to the wetting device (26) and/or into the bulk material outlet (22), and a feeding end (16) for feeding the liquid, in particular in the region of the rear side of the central frame.

5. A device according to any one of the preceding claims, **characterized in that** the second, third or fourth bulk material transport device, in particular their receiving region, protrude from the rear side, in particular being provided spaced apart from the rear side.

6. A device according to any one of the preceding claims, further comprising a second conduit (24), in particular comprising at least one pneumatic conveying trough, for transporting fluidizable bulk material from the storage container (10), having a feeding end (16) at or inside the storage container (10), in particular at the bottom side of the storage container, or at the supply conduit from the bulk material outlet (22) to the wetting device (26), and a discharge end for dispensing or transferring fluidizable bulk material from the storage container.

7. A device according to claim 6, further comprising at least one third conduit, in particular comprising at least one pneumatic conveyor trough, for transporting fluidizable bulk material, having a feeding end and a discharge end, wherein said feeding end is or can be connected to the discharge end of the second conduit (24).

8. A device according to any one of the preceding claims, further comprising at least one fourth conduit, in particular comprising at least one pneumatic conveyor trough, for transporting fluidizable bulk material, having a feeding end, in particular at the rear side of the central frame, in the region of the rear side or spaced apart from the rear side of the central frame, and a discharge end for dispensing or transferring fluidizable bulk material.

9. A device according to claim 7 or 8, further comprising at least one fifth conduit, in particular comprising at least one pneumatic conveyor trough, for transporting fluidizable bulk material, having a feeding end which, in particular, can be reversibly closed, preferably reversibly coupled to a conveyor conduit, in particular being provided at or in the region of the rear side or spaced apart from the rear side, and a discharge end, which is or can be connected to the feeding end of the third conduit.

10. A device according to any one of claims 6 to 9, further comprising at least one second cantilever arm, the position and/or length of which can be varied in particular, containing at least one section of the second, third, fourth and/or the fifth conduit.

11. A loading module for loading transporters, in particular large-capacity transporters, comprising a device according to any one of the preceding claims and at least one, in particular stationary, conveyor station (18), comprising at least one transport conduit for transferring fluidizable bulk material, comprising at least one discharge end which can be reversibly closed and coupled to the feeding end of the first and, if applicable, also to the fourth and/or fifth conduit.

12. A loading module according to claim 11, further comprising at least one transfer unit for transferring non-fluidizable bulk material onto or to the second, third and/or fourth bulk material transport device.

13. A loading module according to claim 12, further comprising at least one fifth bulk material transport device for delivering non-fluidizable bulk material to the transfer unit.

14. A loading module according to any one of claims 11 to 13, comprising two, three or four conveyor stations.

15. A loading module according to claim 14, **characterized in that** the fifth bulk material transport device extends beyond the first conveyor station (18) to the second, third and/or fourth conveyor station.

16. A loading module according to claim 14 or 15, **characterized in that** the transport conduit extends beyond the first conveyor station (18) to the second, third and/or fourth conveyor station.

17. The use of the device according to any one of claims 1 to 10 or of the loading module according to any one of claims 11 to 16 for loading ships, trucks or freight cars with fluidizable bulk material and/or for, in particular alternatingly, loading ships, trucks or freight cars with fluidizable and non-fluidizable bulk material.

## Revendications

1. Dispositif (1) de chargement de moyens de transport, en particulier de moyens de transport grand format, avec des produits en vrac, comprenant
a) un châssis central (2), en particulier déplaçable, avec un côté frontal (4) et un côté arrière (6) opposé avec au moins un réservoir de stockage (10) pour recevoir du produit en vrac, pouvant être fluidisé, avec au moins une première sortie de produit en vrac (22),
b) au moins un dispositif d'humidification (26), en particulier une vis sans fin d'humidification, pour l'humidification du produit en vrac prélevé par le biais de la première sortie de produit en vrac (22),
c) au moins une première conduite (12), en particulier une conduite de transport sous pression, pour le transport du produit en vracpouvant être fluidisé vers le réservoir de stockage (10) avec une extrémité de livraison (14) pour le transfert du produit en vracpouvant être fluidisé vers le réservoir de stockage (10) et une extrémité d'entrée (16), en particulier pouvant être fermée de façon réversible, de préférence pouvant être couplée de façon réversible à une conduite de transport, **caractérisé par**
d) au moins un premier bras d'extension (34), en particulier dont on peut faire varier la position et/ou la longueur, contenant un premier dispositif de transport du produit en vrac (32), en particulier au moins une bande transporteuse, avec une zone de livraison, en particulier une extrémité de livraison, et une zone de réception (38), en particulier une extrémité de réception,
e) au moins un dispositif de livraison de produit en vrac (42) avec une zone de réception, en particulier une extrémité de réception, et une zone de livraison, en particulier une extrémité de livraison, aménagé et adapté pour la réception de produit en vrac du premier dispositif de transport du produit en vrac et pour le convoyage du produit en vrac dans un moyen de transport, en particulier un moyen de transport grand format,
f) au moins un deuxième dispositif de transport de produit en vrac (28), en particulier au moins une bande transporteuse, aménagé et adapté pour la réception et le transport du produit en vrac, pouvant être fluidisé, humidifié par le biais du dispositif d'humidification (26) et provenant du réservoir de stockage, avec une première zone de réception (30), en particulier une extrémité de réception, et une première zone de livraison (36), en particulier une extrémité de livraison, la première zone de livraison (36) étant aménagée ou aménageable de sorte que le produit en vracpouvant être fluidisé humidifié peut être conduit au premier dispositif de transport du produit en vrac (32), en particulier à sa zone de réception (38).

2. Dispositif selon la revendication 1, **caractérisé en ce que** le deuxième dispositif de transport de produit en vrac (28) est également aménagé et adapté pour la réception de produit en vrac ne pouvant pas être fluidisé, qui ne provient pas du dispositifd'humidification, en particulier par le biais d'une deuxième zone de réception, en particulier d'une deuxième extrémité de réception, ainsi que pour le transfert, par le biais de la première zone de livraison,au premier dispositif de transport de produit en vracde ce produit en vracne pouvant pas être fluidisé.

3. Dispositif selon la revendication 1 ou la revendication 2, comprenant également au moins un troisième dispositif de transport de produit en vrac, en particulier une bande transporteuse, avec une zone de réception, en particulier une extrémité de réception, et une zone de livraison, en particulier une extrémité de livraison, approprié et aménagé pour le transport de produit en vracne pouvant pas être fluidisé, la zone de livraison étant adaptée et aménagée pour la livraison de produit en vrac à ou sur le premier dispositif de transport du produit en vrac (32), et la zone de réception étant aménagée et adaptée pour la réception de produit en vracne pouvant pas être fluidisé,
et/ou au moins un quatrième dispositif de transport du produit en vrac, en particulier au moins une bande transporteuse, avec une zone de réception, en particulier une extrémité de réception, et une zone de livraison, en particulier une extrémité de livraison, adapté et aménagé pour le transport de produit en vracne pouvant pas être fluidisé qui ne provient pas du dispositif d'humidification, la zone de livraison étant adaptée et aménagée pour la livraison de produit en vrac à ou sur le deuxième dispositif de transport du produit en vrac (28), et la zone de réception étant aménagée et adaptée pour la réception de produit en vracne pouvant pas être fluidisé qui ne provient pas du dispositif d'humidification.

4. Dispositif selon une des revendications précédentes, **caractérisé par** au moins une conduite de liquide avec une extrémité de sortiequi débouche dans le dispositif d'humidification (26) et/ou dans une conduite d'amenée, conduisant de la sortie de produit en vrac (22) du réservoir de stockage (10) au dispositif d'humidification (26), et/ouqui débouche dans la sortie de produit en vrac (22), et avec une extrémité d'entrée (16) pour l'alimentation en liquide, en particulier dans la zone du côté arrière du châssis central.

5. Dispositif selon une des revendications précédentes, **caractérisé en ce que** le deuxième, troisième ou quatrième dispositif de transport de produit en vrac, en particulier leur zone de réception, dépassent du côté arrière, en particulier sont situés à distance du côté arrière.

6. Dispositif selon une des revendications précédentes, comprenant également une deuxième conduite (24), en particulier comprenant au moins une goulotte de transport pneumatique, pour le transport, hors du réservoir de stockage (10), de produit en vracpouvant être fluidisé avec une extrémité d'entrée (16) sur ou dans le réservoir de stockage (10), en particuliersur le côté inférieur du réservoir de stockage, ou sur la conduite d'amenée,conduisant de lasortie de produit en vrac (22) au dispositif d'humidification (26), et avec une extrémité de sortie pour la livraison ou le transfert, à partir du réservoir de stockage, de produit en vracpouvant être fluidisé.

7. Dispositif selon la revendication 6, comprenant également au moins une troisième conduite, en particulier comprenant au moins une goulotte de transport pneumatique, pour le transport de produit en vracpouvant être fluidisé avec uneextrémité d'entrée et une extrémité de sortie, cette extrémité d'entrée étant raccordée ou pouvant être raccordée à l'extrémité de sortie de la deuxième conduite (24).

8. Dispositif selon une des revendications précédentes, comprenant également au moins une quatrième conduite, en particulier comprenant au moins une goulotte de transport pneumatique, pour le transport de produit en vracpouvant être fluidisé, avec une extrémité d'entrée, en particulier sur le côté arrière du châssis central, dans la zone du côté arrière ou à distance du côté arrière du châssis central, et avec une extrémité de sortie pour la livraison ou le transfert de produit en vracpouvant être fluidisé.

9. Dispositif selon la revendication 7 ou 8, comprenant en outre au moins une cinquième conduite, en particulier comprenant au moins une goulotte de transport pneumatique, pour le transport de produit en vracpouvant être fluidisé, avec uneextrémité d'entrée, en particulier pouvant être fermée de façon réversible, de préférence pouvant être couplée de façon réversible à une conduite de transport, en particulier sur ou dans la zone du côté arrière ou située à distance du côté arrière, et une extrémité de sortie qui est raccordée ou peut être raccordée à l'extrémité d'entrée de la troisième conduite.

10. Dispositif selon une des revendications 6 à 9, comprenant également au moins un deuxième bras d'extension, en particulier dont on peut faire varier la position et/ou la longueur, contenant au moins un tronçon de la deuxième, troisième, quatrième et/ou de la cinquième conduite.

11. Module de chargement pour le chargement de moyens de transport, en particulier de moyens de transportgrand format, comprenant un dispositif selon une des revendications précédentes et au moins une station de convoyage (18), en particulier stationnaire, comprenant au moins une conduite de transport pour le transfert de produit en vracpouvant être fluidisé, comprenant au moins une extrémité de sortie pouvant être fermée de façon réversible et pouvant être couplée à l'extrémité d'entrée de la première conduite et le cas échéant également de la quatrième et/ou de la cinquième conduite.

12. Module de chargement selon la revendication 11, comprenant également au moins une unité de remise pour la remise de produit en vracne pouvant pas être fluidisé sur le ou au deuxième, troisième et/ou quatrième dispositif de transport de produit en vrac.

13. Module de chargement selon la revendication 12, comprenant également au moins un cinquième dispositif de transport de produit en vrac pour la fourniture, à l'unité de remise, de produit en vracne pouvant pas être fluidisé.

14. Module de chargement selon une des revendications 11 à 13, comprenant deux, trois ou quatre stations de convoyage.

15. Module de chargement selon la revendication 14, **caractérisé en ce que** le cinquième dispositif de transport de produit en vrac s'étend au-delà de la première station de convoyage (18) jusqu'à la deuxième, troisième et/ou quatrième station de convoyage.

16. Module de chargement selon la revendication 14 ou la revendication 15, **caractérisé en ce que** la conduite de transport s'étend au-delà de la première station de convoyage (18) jusqu'à la deuxième, troisième et/ou quatrième station de convoyage.

17. Utilisation du dispositif selon une des revendications 1 à 10 ou du module de chargement selon une des revendications 11 à 16 pour le chargement de navires, de camions ou de wagons avec du produit en vracpouvant être fluidisé, et/ou pour le chargement, en particulier alternant, de navires, de camions ou de wagons avec du produit en vracpouvant être fluidisé et avec du produit en vracne pouvant pas être fluidisé.
